# FASCICULE DE BREVET EUROPEEN

(11) **EP 0 899 012 B1**
(45) Date de publication et mention de la délivrance du brevet: **20.08.2003**
(21) Numéro de dépôt: 98402059.4
(22) Date de dépôt: 14.08.1998
(51) Int. Cl.: B01J 23/40, B01J 35/10

(54) **Nouveaux catalyseurs utilisables dans les réactions de transformation de composés organiques**
Neue Katalysatoren für die Umwandlungsreaktionen von organischen Verbindungen
New catalysts suitable for the conversion reactions of organic compounds

(30) Priorité: 29.08.1997 FR 9710878
(43) Date de publication de la demande: 03.03.1999
(73) Titulaire: INSTITUT FRANCAIS DU PETROLE, 92500 Rueil Malmaison (FR)
(72) Inventeur: Didillon, Blaise, 92500 Rueil Malmaison (FR); Uzio, Denis, 78160 Marly Le Roi (FR); Delage, Maryline, 92500 Rueil Malmaison (FR)

(56) Documents cités:
- EP-A- 0 488 514
- EP-A- 0 549 543
- US-A- 4 762 956

## Description

La présente invention concerne un nouveau catalyseur renfermant au moins un support et au moins un métal du groupe VIII de la classification périodique des éléments. Ce catalyseur peut aussi contenir un autre métal choisi dans le groupe constitué par les métaux alcalins et/ou un métalloïde tel que le soufre et/ou tout autre élément chimique tel qu'un halogène ou un composé halogéné.

Le contrôle des caractéristiques texturales des particules de métal déposées sur un support a fait l'objet de nombreuses études dans la littérature et continue d'être le centre d'intérêt de recherches récentes. En effet, la taille des particules par exemple est un facteur déterminant quand il s'agit de mettre en oeuvre un catalyseur dans une réaction qualifiée de "sensible à la structure" au sens de Boudart. Une transformation chimique est dite "sensible à la structure" si sa vitesse de réaction (ou le nombre de rotation ¹) est dépendante de la taille des cristallites métalliques, dans le cas de catalyseurs monométalliques, ou de la composition de surface pour des catalyseurs bimétalliques. De même, l'état électronique du métal constituant le site actif de surface conditionnera la force d'adsorption des réactifs et par conséquent les performances catalytiques (activité, sélectivité et stabilité). On rencontre dans la littérature de très nombreux exemples d'études visant à établir le caractère sensible ou insensible à la structure d'une réaction donnée : hydrogénation des alcènes linéaires ou cycliques ^{2, 3} sur des catalyseurs à base de Pt ou de Pd (réaction insensible), hydrogénation des alcynes et des dioléfines ⁴ (réactions sensibles), hydrogénolyse des liaisons C-C dans des composés paraffiniques ou naphténiques ^{5, 6} .
¹ Le nombre de rotation est défini comme la vitesse de réaction ramenée au nombre d'atomes de métal de surface.
² J.C. Schlatter, M. Boudart, J. Catal., 24 1972 482
³ M. Boudart, W.C. Cheng, J. Catal. 106, 1987, 134
⁴ S. Hub, L. Hilaire, R. Touroude, Appl. Catal. 36 1992, 307
⁵ J. Barbier, P. Marecot, Nouv. J. Chim. 5, 1981. 393
⁶ J. R. Anderson, Y. Shymoyama Proc. 5^{th} Int. Cong. Catal., Palm Beach, 1972, North Holland Publ. Co/Amer. Elsevier, Vol 1, 1973, 55.

La formulation de catalyseurs utilisés dans les procédés de conversion d'hydrocarbures ont fait l'objet d'un très grand nombre d'études. Les catalyseurs métalliques supportés contenant une phase métallique à base de palladium ou de nickel supporté sur un support de type oxyde réfractaire tel que l'alumine sont couramment utilisés dans les réactions d'hydrogénation des essences par exemple.

Pour l'ensemble des réactions dites sensibles à la structure, le protocole de préparation des catalyseurs est particulièrement important et a pour objectif d'obtenir la taille optimale des particules métalliques correspondant au maximum de la vitesse de la réaction. Ainsi, dans le cas de la réaction d'hydrogénation sélective du butadiène, il est admis que le catalyseur le plus actif doit contenir des particules d'environ 40 Å.

Cependant, la nature "sensible à la structure" d'une réaction imposant une taille de particules bien déterminée et en général relativement importante (quelques dizaines d'angströms) limite fortement la surface métallique exposée par unité de masse de métal et par conséquent l'activité catalytique.

La présente invention montre qu'il est possible de préparer des catalyseurs contenant au moins un métal du groupe VIII de la classification périodique des éléments, qui sont particulièrement performants. Les particules métalliques ont une taille inférieure à 10 Å, ce qui permet d'exposer aux réactifs la plupart des atomes de métal déposés sur le support. Ces catalyseurs sont caractérisés par des volumes de CO chimisorbés d'au moins 180 cm³ par gramme de métal, ce qui correspond à une dispersion ⁷ supérieure ou égale à 80 %. La caractérisation par analyse en réduction en température programmée (RTP) de ce type de catalyseurs donne un seul pic de consommation d'hydrogène centré sur une gamme de température de 50 à 300 °C (de préférence de 100 à 200 °C). Aucun phénomène de relargage d'hydrogène n'est observé à basse température (environ 70 °C), relargage généralement associé à la formation d'hydrures métalliques et caractérisé en RTP par un signal de production d'hydrogène intense aux alentours de T = 70 °C.
⁷. La dispersion métallique est définie par le rapport du nombre d'atomes de métal exposés en surface au nombre total d'atomes métalliques.

La mesure du volume de monoxyde de carbone chimisorbé est en général effectuée selon la procédure suivante : après un traitement à 200 °C sous flux d'hydrogène pendant 2 heures, puis sous hélium pendant 2 heures, on laisse refroidir jusqu'à température ambiante, toujours sous hélium, avant d'injecter un volume connu de CO. La consommation du CO est suivie par chromatographie en phase gaz.

La procédure de l'analyse RTP est basée sur la mesure de la quantité d'hydrogène consommé par la réduction de la phase métallique en fonction de la température. Le profil RTP obtenu montre donc l'intensité de la réduction en fonction de la température. L'intégration des pics de réduction donne la quantité d'hydrogène consommé. La procédure comprend une réoxydation in-situ, en général par une calcination préalable à 200°C pendant 2 heures avec une montée en température de 5 °C/min. Après la réoxydation, les échantillons sont réduits de la température ambiante jusqu'à 900 °C, en montant la température de 5 °C/min sous un flux de gaz constitué de 5 % d'hydrogène et de 95 % d'argon, injecté avec un débit de 20 cm³/min.

Une autre technique de caractérisation permettant de caractériser la nature des interactions entre le métal et le support est l'EXAFS (de l'anglais : Extended X-ray Absorption Fine Structure). Cette technique spectroscopique permet en effet de déterminer directement, en terme de nature et de nombre, les éléments se trouvant au voisinage de l'élément considéré. On pourra ainsi connaître l'environnement du métal déposé par telle ou telle technique de préparation.

Les procédés de conversion d'hydrocarbures auxquels s'appliquent les catalyseurs de l'invention opèrent à une température comprise entre 10 et 800 °C et une pression comprise entre 0,1 et 10 MPa.

Plus particulièrement, les catalyseurs de la présente invention peuvent s'appliquer:
- aux procédés de purification catalytique des coupes oléfiniques par hydrogénation sélective. Les conditions généralement utilisées pour ce type de transformations sont une température moyenne comprise entre 25 et 200 °C, une pression comprise entre 0,1 et 10 MPa et un rapport molaire hydrogène sur hydrocarbures compris entre 1 et 150. La charge est généralement une coupe issue du vapocraqueur contenant de 5 à 12 atomes de carbone par molécule ;
- aux procédés catalytiques de d'hydrogénolyse entre 400 et 800 °C, à une pression comprise entre 0,1 et 2 MPa et avec un rapport molaire hydrogène sur hydrocarbures compris entre 0 et 20 ;
- aux procédés d'hydrogénation d'hydrocarbures comportant des fonctions alcynes, dièniques ou oléfiniques, ou aromatiques, dans des conditions connues de l'homme de l'art et plus particulièrement à une température moyenne comprise entre 10 et 400 °C et sous une pression comprise entre 0,1 et 10 MPa ; et
- aux procédés d'hydrogénation de fonctions organiques telles que les fonctions aldéhydes, cétones, esters, acides ou nitro, dans des conditions connues de l'homme de l'art et plus particulièrement à une température moyenne comprise entre 10 et 500 °C et sous une pression comprise entre 0,1 et 10 MPa.

Le support du catalyseur selon l'invention comporte au moins un oxyde réfractaire qui est généralement choisi parmi les oxydes de métaux des goupes IIA, IIIA, IVB et IVA de la classification périodique des éléments, tels que par exemple les oxydes de magnésium, d'aluminium, de silicium, de titane, de zirconium ou de thorium, pris seuls ou en mélange entre eux ou en mélange avec des oxydes d'autres métaux de la classification périodique. On peut aussi utiliser le charbon. On peut aussi utiliser des zéolithes ou tamis moléculaires de type X, Y, mordénite, faujasite, ZSM-5, ZSM-4, ZSM-8 etc., ainsi que des mélanges d'oxydes de métaux des groupes IIA, IIIA, IVB et/ou IVA avec un matériau zéolithique.

Pour les réactions de transformation d'hydrocarbures, le support préféré est l'alumine, dont la surface spécifique est avantageusement comprise entre 5 et 400 m² par gramme, de préférence entre 5 et 150 m² par gramme.

Les supports préférés utilisés dans le domaine de la transformation de fonctions organiques sont la silice, le charbon et l'alumine.

Dans le catalyseur selon l'invention, le métal du groupe VIII est choisi le plus souvent parmi l'iridium, le nickel, le palladium, le platine, le rhodium et le ruthénium. Le platine et le palladium sont les métaux préférés pour les réactions de conversion d'hydrocarbures. Le rhodium et le ruthénium sont les métaux préférés pour la transformation de molécules fonctionnelles (dans le domaine de la chimie fine). Le pourcentage pondéral est choisi entre 0,01 et 10 % et de préférence entre 0,1 et 5 %. Le catalyseur peut également contenir un élément additionnel choisi dans le groupe des métaux alcalins, alcalino-terreux et des métalloïdes (comme par exemple le soufre). Le pourcentage pondéral est choisi entre 0,01 et 10%, et de préférence entre 0,02 et 5 %.

Le catalyseur peut être préparé par différentes procédures d'imprégnation du support et l'invention n'est pas limitée à une procédure d'imprégnation déterminée. Quand on utilise plusieurs solutions, on peut procéder à des séchages et/ou des calcinations intermédiaires.

Le précurseur du métal catalytique peut être choisi dans le groupe formé par l'hydroxyde, les composés halogénés, le nitrate, l'acétate, et le chlorure du métal considéré.

Dans une technique préférée de préparation selon l'invention, le catalyseur est obtenu par imprégnation du support à l'aide d'une solution aqueuse d'au moins un composé de métal du groupe VIII, le volume de la solution correspondant au volume de rétention du support. Le support imprégné est ensuite séché et calciné sous air, habituellement entre 100 et environ 500 °C, puis réduit sous hydrogène à une température habituellement comprise entre environ 100 et environ 600 °C et de préférence entre environ 150 et environ 300 °C.

Cette réduction pouvant être effectuée aussitôt après la calcination, ou plus tard chez l'utilisateur. Il est aussi possible de réduire directement le produit séché directement chez l'utilisateur.

Les exemples qui suivent illustrent l'invention sans toutefois en limiter la portée.

### Exemple 1 (référence)

Un catalyseur A est préparé par imprégnation d'un support d'alumine avec une solution de nitrate de palladium. Ce support se présente sous forme de billes de 2 à 4 mm de diamètre. Sa surface spécifique est de 65 m²/g et son volume poreux de 0,6 ml/g. Après imprégnation, le catalyseur est séché à 120 °C et calciné à 450 °C. La teneur en palladium du catalyseur A est de 0,3 % en masse.

### Exemple 2 (selon l'invention)

Un catalyseur B est préparé par imprégnation d'un support d'alumine avec une solution contenant du nitrate de palladium et du nitrite de sodium. Ce support est sous forme de billes de 2 à 4 mm de diamètre, sa surface spécifique de 139 m²/g et son volume poreux de 1,05 ml/g. Après imprégnation, le catalyseur est séché à 120 °C et calciné à 200 °C. La teneur en palladium du catalyseur B est de 0,3 % en masse.

### Exemple 3 (selon l'invention)

Un catalyseur C est préparé par imprégnation d'un support d'alumine avec une solution contenant du nitrate de palladium et du nitrite de sodium. Ce support est sous forme de billes de 2 à 4 mm de diamètre, sa surface spécifique de 39 m²/g et son volume poreux de 0,57 ml/g. Après imprégnation, le catalyseur est séché à 120°C et calciné à 200 °C. La teneur en palladium du catalyseur C est de 0,3 % en masse.

### Exemple 4 (référence)

Un catalyseur D est préparé par imprégnation en excès d'un support d'alumine avec une solution d'acétylacétonate de palladium dans du toluène. Ce support est sous forme de billes de 2 à 4 mm de diamètre, sa surface spécifique de 39 m /g et son volume poreux de 0,57 ml/g. Après imprégnation, le catalyseur est lavé avec une solution de toluène, puis séché à 120 °C une nuit et calciné 2 heures à 450 °C sous un flux d'air. La teneur en palladium du catalyseur D est de 0,3 % poids.

### Exemple 5 (référence)

On répète l'exemple 4 mais avec un support d'alumine ayant une surface spécifique de 139 m²/g. On obtient le catalyseur E.

### Exemple 6

Pour les 5 catalyseurs A à E, la détermination des volumes de CO chimisorbés a été effectuée selon une procédure dynamique à 20 °C. Les volumes de CO chimisorbés rapportés dans le tableau 1 sont exprimés en cm³/g Pd.

**Tableau 1:**

| Valeurs des volumes de CO chimisorbés. | | | | | |
|---|---|---|---|---|---|
| Catalyseur | A | B | C | D | E |
| Volume de CO cm³/g Pd | 70 | 230 | 190 | 199 | 200 |

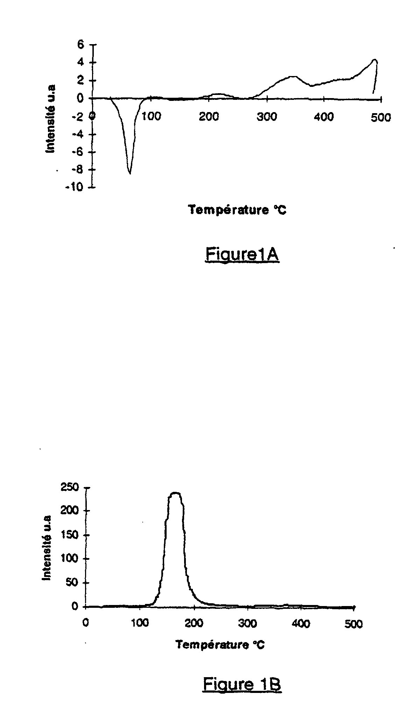

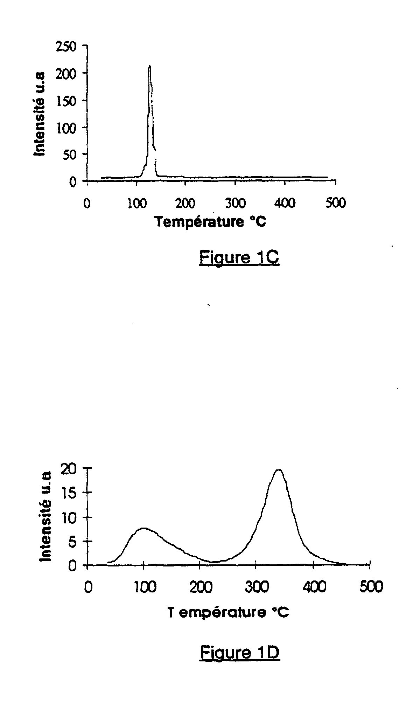

L'analyse RTP des catalyseurs A, B, C et D a été conduite suivant le protocole décrit précédemment. Les Figures 1A à 1D montrent les profils de Réduction en Température Programmée des catalyseurs A, B, C et D.

Les profils RTP des catalyseurs B et C sont conformes à l'invention et présentent :
- un pic unique de réduction "basse température" (T < 300 °C);
- l'absence de production d'hydrogène liée à la décomposition d'hydrures de palladium.

En revanche, les catalyseurs de référence A et D présentent plusieurs signaux de consommation d'hydrogène dont au moins un pour une température supérieure à 300 °C. Le profil RTP du catalyseur A présente également un pic de production d'hydrogène à une température voisine de 70°C.

Le catalyseur E présente un profil RTP analogue à celui du catalyseur D.

### Exemple 7

La caractérisation par EXAFS des catalyseurs B et E montre la présence d'oxygène dans l'environnement proche du palladium pour le catalyseur E (premier voisin) alors que dans le cas du catalyseur B le Pd n'est entouré que d'autres atomes de palladium. Ces atomes d'oxygène, ne pouvant être apportés que par le support d'alumine, sont l'indication qu'il existe une liaison (donc une interaction relativement forte) entre le palladium présent sur le catalyseur E et le support. En revanche, le même raisonnement montre qu'il n'y a pas ou peu d'interaction entre le Pd présent sur le catalyseur B et le support. Cette différence est attribuée aux techniques de préparation mises en oeuvre.

### Exemple 8

Les propriétés hydrogénantes des catalyseurs A à E sont évalués en test discontinu dans un réacteur parfaitement agité de type "Grignard". Deux grammes de catalyseur à base de palladium sont réduits 2 heures à 200°C sous courant d'hydrogène, puis transférés sous inerte dans le réacteur d'hydrogénation. La charge à hydrogéner est un mélange contenant 12 g de dioléfine (butadiène) diluée dans 180 cm³ de n-heptane. La température du test est maintenue à 20°C et la pression à 10 bar. Les résultats sont rassemblés dans le tableau 2. L'activité hydrogénante est exprimée en mol·min⁻¹·g Pd.

**Tableau 2:**

| Performances catalytiques en hydrogénation du 1,3 butadiène. | | | | | |
|---|---|---|---|---|---|
| Catalyseur | A | B | C | D | E |
| Activité (mol·min⁻¹·g Pd⁻¹) | 4,25 | 8,75 | 6,35 | 1,6 10⁻³ | 2,10⁻¹ |
| Sélectivité % en butène-1 à 80 % de conversion du butadiène | 59 | 55 | 58 | 60 | 59 |

L'activité du catalyseur B est 2 fois plus importante que celle du catalyseur A de référence, tout en conservant une sélectivité en butène-1 élevée.

Pour un même support et des volumes de CO chimisorbé par gramme de palladium voisins, l'activité du catalyseur B est nettement supérieure à celle du catalyseur E (x 44) et l'activité du catalyseur C considérablement supérieure à celle du catalyseur D (x 4000).

### Exemple 9

Les propriétés hydrogénantes des catalyseurs A, B et E ont évalués en test discontinu dans un réacteur parfaitement agité de type "Grignard". Deux grammes de catalyseur à base de palladium sont réduits 2 heures à 200 C sous courant d'hydrogène, puis transférés sous inerte dans le réacteur d'hydrogénation. La charge à hydrogéner est un mélange contenant 13 g de phénylactétylène dilué dans 180 cm³ de n-heptane. La température du test est maintenue à 17 °C et la pression à 10 bar. Les résultats sont rassemblés dans le tableau 3. L'activité hydrogénante est exprimée en mol·min⁻¹·g Pd⁻¹.

**Tableau 3:**

| Performances catalytiques en hydrogénation du phénylacétylène. | | | |
|---|---|---|---|
| Catalyseur | A | B | E |
| Activité (mol·min⁻¹·g Pd⁻¹) | 1,15 | 1,29 | 0,30 |
| Sélectivité % en styrène à 80 % de conversion du phénylacétylène | 97,5 | 96 | 95 |

Dans ce cas également, l'activité spécifique du catalyseur B est supérieure à celle des catalyseurs de référence A et E.

Les exemples qui précèdent peuvent être répétés avec des résultats analogues en substituant les réactifs et/ou les conditions générales ou particulières décrites dans l'invention à ceux mis en oeuvre dans ces exemples.

## Revendications

1. Catalyseur renfermant un support consistant en au moins un oxyde réfractaire, une zéolithe et/ou du charbon et renfermant une phase active comprenant au moins un métal du groupe VIII de la Classification Périodique, **caractérisé en ce qu'**il présente une dispersion des atomes du métal du groupe VIII supérieure ou égale à 80 %, la dispersion métallique étant définie par le rapport du nombre d'atomes de métal exposés en surface au nombre total d'atomes métalliques, que les particules métalliques ont une taille inférieure à 10 Å et qu'il présente un profil de réduction en température programmée comportant un seul pic de consommation d'hydrogène, la procédure d'analyse comprend une calcination préalable à 200 °C pendant 2 heures avec une montée en température de 5°C/min, puis une réduction de la température ambiante jusqu'à 900 °C, en montant la température de 5 °C/min sous un flux de gaz constitué de 5 % d'hydrogène et de 95 % d'argon, injecté avec un débit de 20 cm³/min.

2. Catalyseur selon la revendication 1 constitué dudit support et de ladite phase active.

3. Catalyseur selon l'une des revendications 1 ou 2, **caractérisé en ce que** son support comporte au moins un oxyde réfractaire choisi parmi les oxydes de magnésium, d'aluminium, de silicium, de titane, de zirconium ou de thorium, pris seuls ou en mélange entre eux ou en mélange avec des oxydes d'autres métaux de la Classification Périodique.

4. Catalyseur selon l'une des revendications 1 ou 2, **caractérisé en ce que** son support comporte du charbon.

5. Catalyseur selon l'une des revendications 1 ou 2, **caractérisé en ce que** son support comporte au moins une zéolithe ou tamis moléculaires de type X, Y, mordénite, faujasite, ZSM-5, ZSM-4, ZSM-8, éventuellement en mélange avec au moins un oxyde de métal des groupes IIA, IIIA, IVB et IVA de la Classification Périodique.

6. Catalyseur selon l'une des revendications 1 à 5, **caractérisé en ce que** le métal du groupe VIII de la Classification Périodique est choisi parmi l'iridium, le nickel, le palladium, le platine, le rhodium et le ruthénium, à un pourcentage pondéral entre 0,01 et 10 %.

7. Catalyseur selon l'une des revendications 1 à 6, **caractérisé en ce que** ledit support est un support d'alumine dont la surface spécifique est comprise entre 5 et 400 m² par gramme et **en ce qu'**il comprend comme métal du groupe VIII du platine et/ou du palladium.

8. Catalyseur selon l'une des revendications 1 à 6, **caractérisé en ce que** ledit support est un support de silice, de charbon ou d'alumine et **en ce qu'**il comprend comme métal du groupe VIII du rhodium et/ou du ruthénium.

9. Catalyseur selon l'une des revendications 1 à 8, **caractérisé en ce qu'**il comprend en outre au moins un élément additionnel choisi dans le groupe des métaux alcalins, alcalino-terreux et des métalloïdes, à un pourcentage pondéral entre 0,01 et 10 %.

10. Catalyseur selon l'une des revendications 1 à 9 constitué d'un support consistant en au moins un oxyde réfractaire, une zéolite et/ou du charbon, d'une phase active comprenant au moins un métal du groupe VIII et d'au moins un élément additionnel choisi dans le groupe des métaux alcalins, alcalino-terreux et des métalloïdes, à un pourcentage pondéral entre 0,01 et 10 %.

11. Utilisation d'un catalyseur selon l'une des revendications 1 à 10 dans un procédé de purification catalytique des coupes oléfiniques par hydrogénation sélective.

12. Utilisation selon la revendication 11 dans laquelle on traite une charge consistant en une coupe d'hydrocarbures issue du vapocraqueur contenant de 5 à 12 atomes de carbone par molécule, à une température moyenne comprise entre 25 et 200 °C, sous une pression comprise entre 0,1 et 10 MPa et avec un rapport molaire hydrogène sur hydrocarbures compris entre 1 et 150.

13. Utilisation d'un catalyseur selon l'une des revendications 1 à 10 dans un procédé catalytique de d'hydrogénolyse réalisé à une température comprise entre 400 et 800 °C, sous une pression comprise entre 0,1 et 2 MPa et avec un rapport molaire hydrogène sur hydrocarbures compris entre 0 et 20.

14. Utilisation d'un catalyseur selon l'une des revendications 1 à 10 dans un procédé d'hydrogénation d'hydrocarbures comportant des fonctions alcynes, dièniques ou oléfiniques, ou aromatiques, à une température moyenne comprise entre 10 et 400 °C et sous une pression comprise entre 0,1 et 10 MPa.

15. Utilisation selon l'une des revendications 11 à 14, dans laquelle le catalyseur employé a un support d'alumine dont la surface spécifique est comprise entre 5 et 400 m2 par gramme et comprend comme métal du groupe VIII du platine et/ou du palladium.

16. Utilisation d'un catalyseur selon l'une des revendications 1 à 10 dans un procédé d'hydrogénation de fonctions organiques telles que les fonctions aldéhydes, cétones, esters, acides ou nitro, à une température moyenne comprise entre 10 et 500 °C et sous une pression comprise entre 0,1 et 10 MPa.

17. Utilisation selon la revendication 16, dans laquelle le catalyseur employé a un support de silice, de charbon ou d'alumine et comprend comme métal du groupe VIII du rhodium et/ou du ruthénium.

## Patentansprüche

1. Katalysator, einschließend einen Träger, der aus wenigstens einem feuerfesten Oxid, einem Zeolith und/oder Kohle besteht, und eine aktive Phase einschließend, die wenigstens ein Metall der Gruppe VIII des Periodensystems umfasst, **dadurch gekennzeichnet, dass** er eine Dispersion der Atome des Metalls der Gruppe VIII des Periodensystems über oder gleich 80% umfasst, wobei die metallische Dispersion durch das Verhältnis der Anzahl von auf der Oberfläche exponierten Metallatomen zur Gesamtzahl von Metallatomen definiert ist, dass die Metallpartikel einen umfang kleiner 10 Å haben und dass er ein programmiertes Temperaturreduktionsprofil aufweist, das eine einzige Spitze an Wasserstoffverbrauch umfasst, das Analyseverfahren eine Vorkalzinierung umfasst, bei 200°C für 2 Stunden mit einem Temperaturanstieg von 5°C/min und dann eine Reduktion von der Umgebungstemperatur bis auf 900°C unter Temperaturanstieg von 5°C/min unter einem Gasstrom, bestehend aus 5% Wasserstoff und 95% Argon, eingespritzt mit einem Durchsatz von 20 cm³/min.

2. Katalysator nach Anspruch 1, bestehend aus dem Träger und der aktiven Phase.

3. Katalysator nach einem der Ansprüche 1 oder 2, **dadurch gekennzeichnet, dass** sein Träger wenigstens ein feuerfestes Oxid, gewählt unter den Oxiden von Magnesium, Aluminium, Silizium, Titan, Zirkonium oder Thorium allein genommen oder im Gemisch untereinander oder im Gemisch mit anderen Oxiden des Periodensystems umfasst.

4. Katalysator nach einem der Ansprüche 1 oder 2, **dadurch gekennzeichnet, dass** sein Träger Kohle umfasst.

5. Katalysator nach einem der Ansprüche 1 oder 2, **dadurch gekennzeichnet, dass** sein Träger wenigstens einen Zeolith oder Molekularsiebe vom Typ X, Y, Mordenit, Faujasit, ZSM-5, ZSM-4, ZSM-8, gegebenenfalls im Gemisch mit wenigstens einem Oxid eines Metalls der Gruppen IIA, IIIA, IVB und IVA des Periodensystems umfasst.

6. Katalysator nach einem der Ansprüche 1 bis 5, dadurch gekennzeichn et, dass das Metall der Gruppe VIII des Periodensystems gewählt wird unter Iridium, Nickel, Palladium, Platin, Rhodium und Ruthenium, bei einem Gewichtsprozentanteil zwischen 0,01 und 10%.

7. Katalysator nach einem der Ansprüche 1 bis 6, **dadurch gekennzeichnet, dass** der Träger ein Aluminiumoxidträger ist, dessen spezifische Oberfläche zwischen 5 und 400 m² pro Gramm liegt und dadurch, dass er als Metall der Gruppe VIII Platin und/oder Palladium umfasst.

8. Katalysator nach einem der Ansprüche 1 bis 6, **dadurch gekennzeichnet, dass** der Träger ein Siliziumoxid-, Kohle- oder Aluminiumoxidträger ist und dadurch, dass er als Metall der Gruppe VIII Rhodium und/oder Ruthenium umfasst.

9. Katalysator nach einem der Ansprüche 1 bis 8, **dadurch gekennzeichnet, dass** er außerdem wenigstens ein Zusatzelement aus der Gruppe der Alkalimetalle, Erdalkalimetalle und der Metalloide bei einem Gewichtsprozentanteil zwischen 0,01 und 10% umfasst.

10. Katalysator nach einem der Ansprüche 1 bis 9, der aus einem Träger besteht, der aus wenigstens einem feuerfesten Oxid, einen Zeolith und/oder Kohle besteht, einer aktiven Phase, die wenigstens ein Metall der Gruppe VIII und wenigstens ein Zusatzelement, gewählt aus der Gruppe der Alkalimetalle, Erdalkalimetalle und der Metalloide bei einem Gewichtsprozentanteil zwischen 0,01 und 10% umfasst.

11. Verwendung eines Katalysators nach einem der Ansprüche 1 bis 10 in einem katalytischen Reinigungsverfahren von den Olefinfraktionen durch selektive Hydrierung.

12. Verwendung nach Anspruch 11, in der man eine Beschickung behandelt, die aus einer Kohlenwasserstofffraktion aus dem Dampfcracken besteht, welche 5 bis 12 Kohlenstoffatome pro Molekül enthält, bei einer mittleren Temperatur zwischen 25 und 200°C unter einem Druck zwischen 0,1 und 10 MPa und mit einem Molverhältnis Wasserstoff zu Kohlenwasserstoffe zwischen 1 und 150.

13. Verwendung eines Katalysators nach einem der Ansprüche 1 bis 10 in einem katalytischen Hydrogenolyseverfahren, durchgeführt bei einer Temperatur zwischen 400 und 800°C, unter einem Druck zwischen 0,1 und 2 MPa und mit einem Molverhältnis Wasserstoff zu Kohlenwasserstoffe zwischen 0 und 20.

14. Verwendung eines Katalysators nach einem der Ansprüche 1 bis 10 in einem Hydrierverfahren von Kohlenwasserstoffen, die Alcyn-, Dien-, oder Olefin- oder Aromatenfunktionen umfassen, bei einer mittleren Temperatur zwischen 10 und 400°C und unter einem Druck zwischen 0,1 und 10 MPa.

15. Verwendung nach einem der Ansprüche 11 bis 14, in der der eingesetzte Katalysator einen Aluminiumoxidträger hat, dessen spezifische Oberfläche zwischen 5 und 400 m² pro Gramm liegt und als Metall der Gruppe VIII Platin und/oder Palladium umfasst.

16. Verwendung eines Katalysators nach einem der Ansprüche 1 bis 10 in einem Hydrierverfahren von organischen Funktionen wie den Aldehyd-, Keton-, Ester-, Säure- oder Nitrofunktionen, bei einer mittleren Temperatur zwischen 10 und 500°C und unter einem Druck zwischen 0,1 und 10 MPa.

17. Verwendung nach Anspruch 16, bei der der eingesetzte Katalysator einen Siliziumoxid-, Kohle- oder Aluminiumoxidträger hat und als Metall der Gruppe VIII Rhodium und/oder Ruthenium umfasst.

## Claims

1. A catalyst comprising a support consisting of at least one refractory oxide a zeolite and/or carbon and an active phase comprising at least one metal from group VIII of the periodic table of the elements, **characterized in that** said catalyst exhibits a dispersion of the atoms of the group VIII metal equal or greater than 80%, the metallic dispersion is defined as the ratio of the number of metal atoms exposed on the surface to the total number of metal atoms, **in that** the metal particles have a size below 10 Å and **in that** it exhibits a programmed temperature reduction profile comprising a single hydrogen consumption peak, the analysis procedure including a preliminary calcination at 200°C for two hours with a temperature rise of 5°C/min, then a reduction, from ambient temperature up to 900°C, by increasing the temperature at 5°C/min in a gas stream constituted by 5% hydrogen and 95% argon, injected at a flow rate of 20 cm³/min.

2. A catalyst according to claim 1, constituted by said support and said active phase.

3. A catalyst according to claim 1 or 2, **characterized in that** its support comprises at least one refractory oxide selected from oxides of metals from groups IIA, IIIA, IVB and IVA of the periodic table, such as magnesium, aluminium, silicon, titanium, zirconium or thorium oxides, used alone or as a mixture, or mixed with oxides of other metals from the periodic table.

4. A catalyst according to claim 1 or 2, **characterized in that** its support comprises carbon.

5. A catalyst according to claim 1 or 2, **characterized in that** its support comprises at least one type X, Y, mordenite, faujasite, ZSM-5, ZSM-4, or ZSM-8 zeolite or molecular sieve, optionally mixed with at least one oxide of a metal from groups IIA, IIIA, IVB and IVA of the periodic table.

6. A catalyst according to any one of claims 1 to 5, **characterized in that** the metal from group VIII of the periodic table is selected from iridium, nickel, palladium, platinum, rhodium and ruthenium, in a percentage in the range 0.01% to 10%.

7. A catalyst according to any one of claims 1 to 6, **characterized in that** said support is an alumina support the specific surface area of which is in the range 5 to 400 m² per gram and **in that** it comprises platinum and/or palladium as the group VIII metal.

8. A catalyst according to any one of claims 1 to 6, **characterized in that** said support is a support of silica, carbon or alumina support and **in that** it comprises rhodium and/or ruthenium as the group VIII metal.

9. A catalyst according to any one of claims 1 to 8, **characterized in that** it further comprises at least one additional element selected from the group formed by alkali metals, alkaline-earth metals and metalloids, in a percentage in the range 0.01% to 10%.

10. A catalyst comprising a support consisting of at least one refractory oxide a zeolite and/or carbon and an active phase comprising at least one metal from group VIII and at least one additional element selected from the group formed by alkali metals, alkaline-earth metals and metalloids, in a percentage in the range 0.01% to 10%.

11. Use of a catalyst according to any one of claims 1 to 10 in a process for catalytic purification of olefinic cuts by selective hydrogenation.

12. Use according to claim 11 in which a feed consisting of a hydrocarbon cut from a steam cracker containing 5 to 12 carbon atoms per molecule is treated at an average temperature in the range 25°C to 200°C, at a pressure in the range 0.1 to 10 MPa and with a molar ratio of hydrogen to hydrocarbons in the range 1 to 150.

13. Use of a catalyst according to any one of claims 1 to 10 in a catalytic hydrogenolysis process carried out at a temperature in the range 400°C to 800°C, at a pressure in the range 0.1 to 2 MPa and with a molar ratio of hydrogen to hydrocarbons in the range 0 to 20.

14. Use of a catalyst according to any one of claims 1 to 10 in a process for hydrogenating hydrocarbons containing alkyne, diene or olefin functions, or aromatic functions, at an average temperature in the range 10°C to 400°C and at a pressure in the range 0.1 to 10 MPa.

15. Use according to any one of claims 11 to 14, in which the catalyst used has an alumina support the specific surface area of which is in the range 5 to 400 m² per gram and which comprises platinum and/or palladium as the group VIII metal.

16. Use of a catalyst according to any one of claims 1 to 10 in a process for hydrogenating organic functions such as aldehyde, ketone, ester, acid or nitro functions, at an average temperature in the range 10°C to 500°C and at a pressure in the range 0.1 to 10 MPa.

17. Use according to claim 16, in which the catalyst has a silica, carbon or alumina support and comprises rhodium and/or ruthenium as the group VIII metal.
